(19) Europäisches Patentamt
European Patent Office
Office européen des brevets

(11) Publication number : **0 452 100 A2**

# (12) EUROPEAN PATENT APPLICATION

(21) Application number : 91303133.2

(51) Int. Cl.⁵ : C08G 61/10, C08J 5/24

(22) Date of filing : 09.04.91

(30) Priority : 09.04.90 US 507552

(43) Date of publication of application : 16.10.91 Bulletin 91/42

(84) Designated Contracting States : BE CH DE ES FR GB IT LI SE

(71) Applicant : THE MEAD CORPORATION
2000 Courthouse Plaza NE
Dayton Ohio 45463 (US)

(72) Inventor : Brandon, Richard L.
305 Braewood Lane
Chillicothe, Ohio 45601 (US)
Inventor : Pokora, Alexander R.
12931 Oakmere Drive
Pickerington, Ohio 43147 (US)
Inventor : Cyrus, William L., Jr.
Route 1, Box 284
Ray, Ohio 45672 (US)

(74) Representative : Deans, Michael John Percy et al
Lloyd Wise, Tregear & CO. Norman House
105-109 Strand
London WC2R OAE (GB)

## (54) Polyphenols, phenolic resins, prepregs and composites.

(57) A composite comprises a reinforcing agent and a cured phenolic resin. The phenolic resin prior to curing is represented by the formula (I)

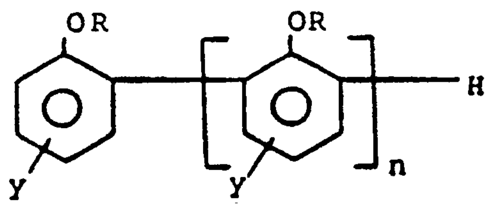

(I)

R is hydrogen, cyano, or 2,3-epoxypropy-l-yl. y may be the same or different and is selected from a hydrogen atom, a halogen atom, an alkyl group, an alkoxy group, a phenylalkyl group, a phenyl group, an allyl group. n is greater than or equal to 1.

EP 0 452 100 A2

The present invention relates to phenolic resin composites, to prepregs, and to the polyphenols and polyphenolic resins from which the composites are prepared.

While phenolic resin composites are well known and have been widely used, the presence of methylene bridges in the resin has limited their utility in certain areas. These methylene bridges are produced by the condensation reaction of the phenol with formaldehyde in preparation of the polyphenolic resin. These methylene bridges are inherently disadvantageous as they are subject to cleavage and reduce the thermal and chemical stability of the polymer.

In our US Patent 4 647 952 a class of phenolic resins is disclosed which do not contain methylene bridges. These resins are prepared by enzymatic oxidation of phenols. In the preferred case, the resins are prepared in an aqueous-organic solvent system in which the phenol is reacted with hydrogen peroxide in the presence of horseradish peroxidase. Another of the advantages of using this enzymatic process and the aqueous-organic solvent system is that it provides this resin in higher molecular weights than can typically be obtained in a Novolak process.

As will become clear from the detailed description which follows, the present invention enables the practical production of a new class of phenolic resin composite which exhibits enhanced thermal stability and solvent resistance, there being an absence of methylene bridges in the epoxy resin.

The phenolic resin used in the present invention is represented by the formula (I)

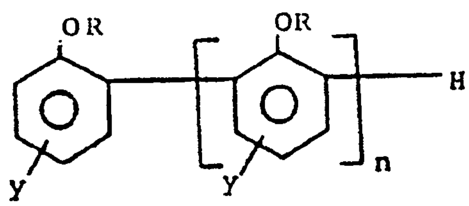

(I)

where R is hydrogen, cyano, or 2,3-epoxyprop-1-yl; y may be the same or different and is selected from the group consisting of a hydrogen atom, a halogen atom, an alkyl group, an alkoxy group, a phenylalkyl group, a phenyl group, an allyl group; and n is greater than or equal to 1. These resins are preferably prepared by the enzymatic process discussed below.

For use in composites, the resins of formula (I) are compounded with a crosslinking agent, fibrous reinforcement and other additives such as cure accelerators and coupling agents. Particulate fillers may be used in place of or together with the fibrous reinforcement. To form the composite the resins with the additives are cured by the addition of hardeners and/or heat.

Accordingly, one manifestation of the present invention is a composite which comprises a reinforcing agent and a cured resin, said resin being represented by the formula (I) above. Another manifestation of the invention is a prepreg containing a resin of the formula (I).

The polyphenolic resins of formula (I) where R is hydrogen can be prepared by a number of processes in which phenols are oxidatively coupled to one another, however, the preferred process is the enzymatic process described in U.S. Patent 4,647,952 and more preferably described in U.S. Patent 4,900,671. Briefly, the phenol is preferably reacted with hydrogen peroxide in an aqueous-organic solvent system (most preferably a 2:1 mixture of water and ethyl acetate) in the presence of horseradish peroxidase. The reaction is preferably carried out at a pH of 4 to 9. Typically, the peroxidase, a phosphate buffer and phenol are dissolved in the solvent system and a solution of the phenol is added to it.

Alternativy methods may also be used to form the polyphenols. Oxidation of phenols with certain metal ions (copper, manganese, etc.) or electrochemical oxidation can yield polymers without the methylène linkage.

Oxidation polymerization of the phenol, by any process, yields a mixture of compounds, namely, dimers, trimers, and higher molecular weight oligomers. For use in composites, it is preferred that the polyphenol have a molecular weight in the range of 300 to 30,000 and preferably in the range of 600 to 6,000.

A variety of crosslinking agents have been described in the literature for curing phenolic resins where R is hydrogen. Representative examples include hexamethylene tetramine, paraformaldehyde, bisoxazole, bisoxazines, trioxane, and other aldehydes.

Composites in accordance with this invention can also be prepared using epoxy derivatives of the formula (II) or cyanate ester derivatives of formula (III).

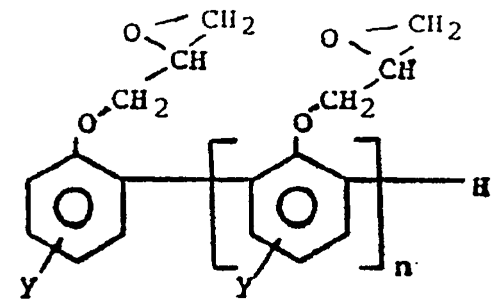

(II)

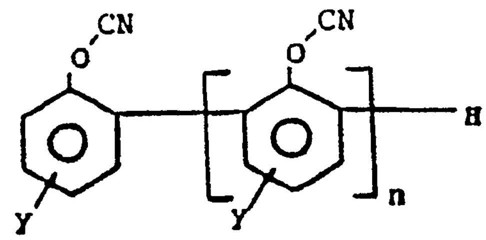

(III)

where y and n have the definition in formula (I).

These derivatives crosslink with appropriate catalysts and/or heat. Mixtures of the resins represented by formula (I) with R equals hydrogen, and formulae (II), and (III) may also be used as well as other polymeric materials including conventional phenol formaldehyde resins.

Resins of formula (III) can be prepared from resin of formula (I) in which R is hydrogen using the synthetic approach described in U.S. Patent 4,831,086 to Das et al. Resins of formula (II) can be prepared by reacting the phenolic resin with epichlorohydrin in the presence of a basic catalyst in an otherwise known manner. It will be appreciated, that the resins are characterized by the absence of methylene bridges.

Examples of compounds which may be used to crosslink resins of the formula (II) include polyamines and polyphenols. The resin of formula (I) where R is hydrogen may also be used to crosslink the resin of formula (II).

Resins of formula (III) are converted into crosslinked phenolic triazines upon heating as noted in U.S. Patent 4,831,086.

The amount of crosslinker will depend on the degree of crosslinking which is desired. The reaction proceeds readily at room or elevated temperatures and pressures.

Composites typically are made up of the continuous matrix phase in which are embedded: (1) a three-dimensional distribution of randomly oriented reinforcing elements; e.g., a particulate-filled composite; (2) a two-dimensional distribution of randomly oriented element:, e.g., a chopped fiber mat; (3) an ordered two-dimensional structure of high symmetry in the plane of the structure, e.g., an impregnated cloth structure; or (4) a highly-aligned array of parallel fibers randomly distributed normal to the fiber directions, e.g., a filament-wound structure, or a prepreg sheet consisting of parallel rows of fibers fibers impregrated with a matrix.

Conventional reinforcing agents include fiber reinforcements such as glass fibers; carbon fibers; plant fibers such as cotton and silk fibers; synthetic fibers such as aramid, nylon, rayon and olefinic fibers; metal fibers, inorganic fibers such a: fiber glass, asbestos, silicon carbide and the like. Woven and non-woven fiber and chopped fiber mats are also useful. While fiber reinforcements are most commonly employed, composites can also be prepared using particles or filler reinforcing agents such as carbon black, clay, talc, mica, microballoons, glass beads, powdered glass, foamed glass, whiskers (e.g., iron, alumina, etc.) etc.

Generally the composites may contain about 5 to 50% by weight reinforcing agent depending upon the properties desired.

The composites can be prepared in any known manner depending on the type of reinforcing agent, the resin, and the performance and shape of the product which is desired. The methods used to make composite materials and structures depend, among other factors, on the type of reinforcement, the matrix, the required performance level, the shape of the article, the number to be made, and the rate of production. The orientation and positioning of continuous filaments are controllable, whereas short fiber; flakes, or particulates are apt to be more randomly distributed. However, varying degrees of preferred orientation can be achieved by appropriate shearing action, magnetic or electrical fields, etc.

In one method, bundles or tows of fibers are formed into a woven or non-woven prepreg which is infiltrated

or impregnated by a melt of the polymer containing the crosslinking agent. The impregnated system may be cured to a B-stage, layered up or otherwise formed into the desired shape and then completely cured. Pressure or vacuum may be used to elininate porosity and to assure complete infiltration and coalescence of the resin.

Composites and prepregs in accordance with this invention are useful in applications in which phenolic resin compositions are conventionally used and particularly in applications which take advantage of their chemical and thermal resistance. One particularly useful application for these composites is in so- called friction composites in which temperature resistance is required such as brake linings and pads, clutch pads, etc.

The invention is illustrated in more detail by the following non-limiting examples:

Example 1

Sixty-seven ml of horseradish peroxidase (300 units per gram) were dissolved in 1600 ml of distilled water and added to a solution of 400 g. of bisphenol A in 240 ml. of acetone and 560 ml. of ethyl acetate contained in a water jacketed 5 liter flask. A 15% solution of hydrogen peroxide was added with stirring over a period of 8 hours while maintaining the temperature near ambient. The stirring was stopped and the organic solvent allowed to separate. Evaporation of the solvent gave the polyphenol as an amber colored, glassy solid.

Example 2

Five hundred grams of a polyphenol prepared from bisphenol A, as described in the previous example, were dissolved in 500 ml. of acetone along with 70 grams of hexamethylene tetramine. The solution was used to saturate a woven glass cloth which was dried in an oven for one half-hour at 250°F. Six plies of the treated fabric were placed in a press and laminated at 50 psi. Starting at 75°F the press temperature was raised 5°F per minute until the temperature reached 375°F and this temperature was maintained for two hours.

The flexural strength of the laminate was tested according to ASTM D-790. The results in KSI are:

| | 65.0° F | 350° F |
|---|---|---|
| Flexural Strength | 31.9 | 21.5 |
| Flexural Modulus | 2.19 | 1.55 |

The resin content of the finished composite was 37%. The composite exhibited low flammability and good char formation during ashing in a muffle furnace.

Example 3

Eight grams of a phenolic resin prepared according to Example 1 were dissolved in 100 ml of 10% aqueous NaOH and added to 100 ml of water in a 500 ml round bottom flask. To the mixture was added 2.5 g of epichlorohydrin. The mixture was heated at 95°C for 30 minutes and an additional 2.5 g of epichlorohydrin was added. The temperature of 95°C was maintained for one hour. The mixture was cooled, the aqueous layer removed and the solid epoxy resin isolated by filtration. The epoxide produced in this way can be crosslinked with any of the common polyamine or phenolic hardeners to form the polymer matrix in a composite structure.

**Claims**

1. A composite which comprises a reinforcing agent and a cured phenolic resin, characterised in that the phenolic resin prior to curing is represented by the formula (I)

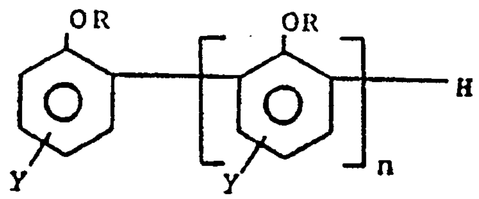

(I)

where R is hydrogen, cyano, or 2,3-epoxyprop-1-yl; y may be the same or different and is selected from a

hydrogen atom, a halogen atom, an alkyl group, an alkoxy group, a phenylalkyl group, a phenyl group, an allyl group; and n is greater than or equal to 1.

2. A composite according to Claim 1, further characterised in that said phenolic resin is cured by reaction with a hardening agent selected from hexamethylene tetramine, bisoxazolines, trioxane, paraformaldehyde.

3. A composite according to Claim 1, further characterised in that said resin is cured by reaction with a polyamine, R being 2,3-epoxyprop-1-yl.

4. A composite according to any preceding claim, further characterised in that said resin has a molecular weight in the range of 300 to 30,000.

5. A composite according to Claim 4, further characterised in that said resin has a molecular weight in the preferred range of 600 to 6,000.

6. A composite according to any preceding claim, further characterised in that the material of said reinforcing agent is a woven or non-woven mat.

7. A composite according to any preceding claim, further characterised in that the material of said reinforcing agent is carbon fibre.

8. A prepreg comprising a woven or non-woven mat or tow which is impregnated with a phenolic resin, characterised in that said phenolic resin has the formula

(I)

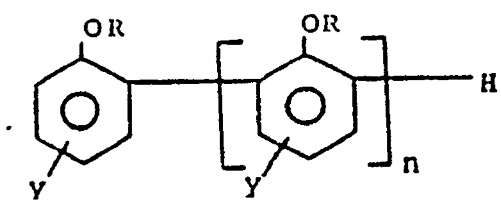

(I)

where R is hydrogen, cyano, or 2,3-epoxyprop-1-yl; y may be the same or different and is selected from a hydrogen atom, a halogen atom, an alkyl group, an alkoxy group, a phenylalkyl group, a phenyl group, an allyl group; and n is greater than or equal to 1, said resin being cured to a B-stage.

9. A polyphenol or derivative thereof of the formula (I) defined in Claims 1 or 8.

10. A brake lining, brake pad, clutch pad or other friction composite, characterised in that it comprises a composite according to any of Claims 1 to 7.